Europäisches Patentamt

European Patent Office

Office européen des brevets

(19)

(11) EP 0 776 688 A1

(12) DEMANDE DE BREVET EUROPEEN

(43) Date de publication:
04.06.1997 Bulletin 1997/23

(51) Int Cl.6: **B01D 53/40, B01D 53/50,
B01D 53/68, B01J 20/34**

(21) Numéro de dépôt: 96402596.9

(22) Date de dépôt: 29.11.1996

(84) Etats contractants désignés:
AT BE CH DE DK ES FI FR GB IE IT LI LU MC NL
PT SE

(30) Priorité: 01.12.1995 FR 9514224

(71) Demandeurs:
• Centre Régional d'Innovation et de Transfert
Technologique en Energétique pour la Région
Poitou-Charentes
86000 Poitiers (FR)

• Centre Régional d'Innovation et de Transfert
Technologique-Conseils et Analyses en Chimie
de la Région Poitou-Charentes
86000 Poitiers (FR)

(72) Inventeurs:
• Aime, Bruno
86340 Roches Premaries (FR)
• Brunet, Régis
86240 Croutelle (FR)

(74) Mandataire: Rinuy, Santarelli
14, avenue de la Grande Armée
75017 Paris (FR)

(54) **Procédé et installation de traitement de rejets gazeux**

(57) Une enceinte 1 traversée par des rejets gazeux à épurer, contient une charge 2 formée par des billes qui flottent lorsqu'elles sont mises dans un liquide de lavage prédéterminé, la charge étant nettoyée directement dans l'enceinte 1, par submersion de la charge dans un bain de liquide de nettoyage, par agitation de ce bain avec maintien de la charge à l'état immergé, puis par séparation de la charge et du bain.

FIG.1

EP 0 776 688 A1

## Description

L'invention a trait au traitement des rejets gazeux, tels que les fumées produites par la combustion des carburants ou par l'incinération des déchets.

On connaît déjà de nombreux procédés de ce type, dans lesquels on emploie une charge pour épurer des rejets, qu'on fait passer à travers elle, cette charge étant régulièrement nettoyée après emploi.

L'invention vise à améliorer ce genre de procédé, notamment en ce qui concerne la commodité du nettoyage de la charge.

Elle propose à cet effet un procédé caractérisé par :

- l'utilisation, pour former ladite charge, de billes qui sont résistantes aux températures prévues pour lesdits rejets, et qui flottent lorsqu'elles sont mises dans un liquide de lavage prédéterminé ; et
- le fait que chaque nettoyage de ladite charge est effectué par submersion de celle-ci dans un bain de dit liquide, par agitation de ce bain avec maintien de la charge à l'état immergé, puis par séparation de la charge et du bain.

La flottabilité des billes dans le liquide de lavage permet d'obtenir aisément l'élimination des produits qui sont accrochés à la charge après emploi : du fait du maintien à l'état immergé de la charge, et de l'agitation du bain, les billes se détachent les unes des autres et se mettent en mouvement de sorte qu'elles frottent ou heurtent les parois de l'enceinte ou les autres billes, ce qui décroche les produits qui les recouvraient, qui passent alors dans le bain, et sont évacués avec lui lorsqu'il est séparé de la charge.

Selon une caractéristique préférée, le procédé selon l'invention se caractérise en outre par l'utilisation de dites billes qui sont incompressibles.

La forme sphérique ou à peu près des billes se maintient donc même s'il y en a une grande quantité qui sont empilées les unes sur les autres, de sorte qu'il subsiste un important espace libre entre les billes pour permettre l'écoulement des rejets, la stabilité de cet espace libre permettant d'obtenir un écoulement en régime établi, et une reproductibilité du fonctionnement dans le temps.

Selon d'autres caractéristiques préférées, le procédé selon l'invention se caractérise en outre par:

- l'utilisation d'un réactif prédéterminé pour retirer des polluants présents dans lesdits rejets gazeux ;
- l'utilisation de dites billes qui sont poreuses au moins en surface, et qui flottent dans une suspension dudit réactif; et
- le fait qu'avant chaque dite période d'emploi, les billes de la charge sont enrobées d'une pellicule dudit réactif, par submersion dans un bain de dite suspension, par agitation de ce bain avec maintien à l'état immergé de la charge, puis par séparation de ce bain et de la charge.

On améliore ainsi les performances du procédé, puisqu'en outre de l'épuration mécanique que représente le passage des rejets à travers la charge, on réalise une épuration chimique avec le réactif.

L'efficacité de cette épuration chimique est particulièrement élevée, puisque l'enrobage des billes avec une pellicule de réactif permet de procurer, avec une quantité relativement réduite de ce dernier, une importante surface de contact avec les rejets gazeux.

La porosité des billes permet en outre d'avoir présente dans la charge une certaine quantité de liquide tel que de l'eau, qui peut être nécessaire ou utile à la réaction chimique.

On observera que la façon dont on réalise le recouvrement des billes avec une pellicule de réactif, est particulièrement commode puisqu'on emploie des moyens similaires à ceux utilisés pour réaliser le lavage.

On notera d'ailleurs à cet égard qu'on prévoit de préférence un certain laps de temps entre la fin du lavage et le début de l'immersion de la charge dans la suspension de réactif, afin que les billes aient rendu au moins une partie du liquide de lavage qu'elles avaient absorbé par porosité, et qu'elles puissent ensuite voir le réactif s'accrocher sur leur périphérie grâce à cette même porosité.

Cette façon de recouvrir les billes est en outre, grâce à l'agitation, particulièrement efficace puisqu'on arrive aisément à les recouvrir entièrement, ce qui est extrêmement utile car on peut ainsi utiliser des billes faites dans une matière attaquée par les rejets gazeux, la pellicule enrobant chaque bille la protégeant entièrement vis-à-vis de ces rejets.

Dans un mode particulier de réalisation, ledit réactif prédéterminé est de la chaux et ladite suspension du lait de chaux, lesdits polluants à retirer étant acides.

Selon d'autres caractéristiques préférées, le procédé selon l'invention se caractérise en outre par l'utilisation de billes qui sont poreuses uniquement en surface.

Ainsi, les billes s'imprègnent de liquide de lavage ou de suspension de réactif, seulement à leur périphérie, de sorte que leur masse volumique à l'état humide leur permet de continuer à flotter.

Dans un mode particulier de réalisation, les billes sont en argile expansé, avec bien évidemment un degré d'expansion convenant vis-à-vis de la densité du liquide de lavage.

Dans un autre mode de réalisation, les billes sont en mousse de céramique, avec une taille convenable de pores ou d'interstices.

On notera que de telles billes, faites dans l'un ou l'autre des matériaux précités, sont simples, commodes et économiques à obtenir, tout en présentant les caractéristiques d'être résistantes aux températures élevées, par exemple de l'ordre de 800°C, que peuvent atteindre certains rejets gazeux, et d'être incompressibles.

Selon d'autres caractéristiques préférées, le procédé selon l'invention se caractérise par :

- l'utilisation d'une cuve pour stocker du dit liquide de lavage entre des opérations de nettoyage ; et
- le fait qu'après une opération de nettoyage, on laisse le liquide de lavage décanter dans ladite cuve, qu'après décantation on évacue le dépôt se trouvant au fond de la cuve, et qu'avant d'effectuer une opération de nettoyage, on remplit la cuve jusqu'à un niveau prédéterminé s'il y a lieu.

On élimine ainsi de façon particulièrement simple et commode les produits qui étaient accrochés à la charge après emploi, puisque ce sont des produits solides (les dépôts) qu'on récupère.

De préférence, pour des raisons de simplicité, de commodité et d'économie, c'est avec de l'eau du réseau qu'on remplit ladite cuve s'il y a lieu.

Une telle eau convient en effet particulièrement bien pour réaliser le lavage, et sa masse volumique permet d'obtenir relativement facilement des billes qui présentent les caractéristiques de flottabilité voulues.

Selon d'autres caractéristiques préférées, le procédé selon l'invention se caractérise en outre par l'utilisation d'une même enceinte pour contenir la charge et faire traverser celle-ci par des dits rejets gazeux, et pour nettoyer cette charge.

On évite ainsi d'avoir à transporter la charge entre un site d'emploi et un site de nettoyage.

De préférence, le procédé selon l'invention se caractérise en outre par l'utilisation de deux dites enceintes, contenant chacune une dite charge, et par le fait que le nettoyage de l'une des dites charges est effectué pendant qu'est en cours une période d'emploi de l'autre charge.

On peut ainsi épurer les rejets gazeux en continu, en utilisant alternativement les deux charges.

Selon d'autres caractéristiques préférées, le procédé selon l'invention se caractérise en outre par l'utilisation, en cours d'emploi, d'une sonde de température disposée dans le trajet des rejets ayant traversé la charge, pour déterminer la fin de cette période d'emploi.

Il est en effet possible de prévoir qu'une période d'emploi se termine lorsqu'il y a une certaine remontée de la température des rejets ayant traversé la charge, jusqu'à environ la température à laquelle se trouvent les rejets à l'amont de celle-ci, le fait qu'il n'y ait plus d'abaissement de température autre que celui dû aux pertes thermiques, montrant que toute l'eau ou le liquide qui était présent dans la charge au début de la période d'emploi, s'est évaporé, l'efficacité de l'épuration effectuée par la charge diminuant alors considérablement dans la plupart des circonstances pratiques de mise en oeuvre.

L'invention vise également, sous un deuxième aspect, une installation qui convient à la mise en oeuvre du procédé qui vient d'être exposé.

Cette installation se caractérise en ce qu'elle comporte :

- une charge formée par des billes qui sont résistantes aux températures prévues pour lesdits rejets, et qui flottent lorsqu'elles sont mises dans un liquide de lavage prédéterminé, cette charge servant, pendant des périodes d'emploi, à épurer des dits rejets gazeux qui la traversent, et étant nettoyée après chaque dite période d'emploi ;
- une enceinte contenant ladite charge, adaptée à être remplie et vidangée de dit liquide de lavage afin respectivement de submerger la charge contenue dans l'enceinte dans un bain de nettoyage et de l'en séparer, comportant un moyen pour maintenir la charge à l'état immergé quand l'enceinte est remplie, et présentant de part et d'autre de la charge, respectivement un orifice d'admission et un orifice de sortie pour des dits rejets gazeux à épurer par cette charge pendant une dite période d'emploi ;
- des moyens pour remplir ladite enceinte avec du dit liquide de lavage et pour l'en vidanger; et
- des moyens pour agiter dans l'enceinte un dit bain de nettoyage.

L'exposé de l'invention sera maintenant poursuivi par la description d'un exemple de réalisation, donnée ci-après à titre illustratif et non limitatif à l'appui des dessins annexés. Sur ceux-ci :

- la figure 1 est une vue partielle très schématique d'une installation conforme à l'invention ;
- la figure 2 est une vue en coupe d'une des billes avec lesquelles on réalise la charge conforme à l'invention, cette bille étant enrobée d'une pellicule de réactif; et
- la figure 3 est une autre vue partielle très schématique de l'installation, montrant les deux enceintes par lesquelles les rejets gazeux à épurer passent alternativement.

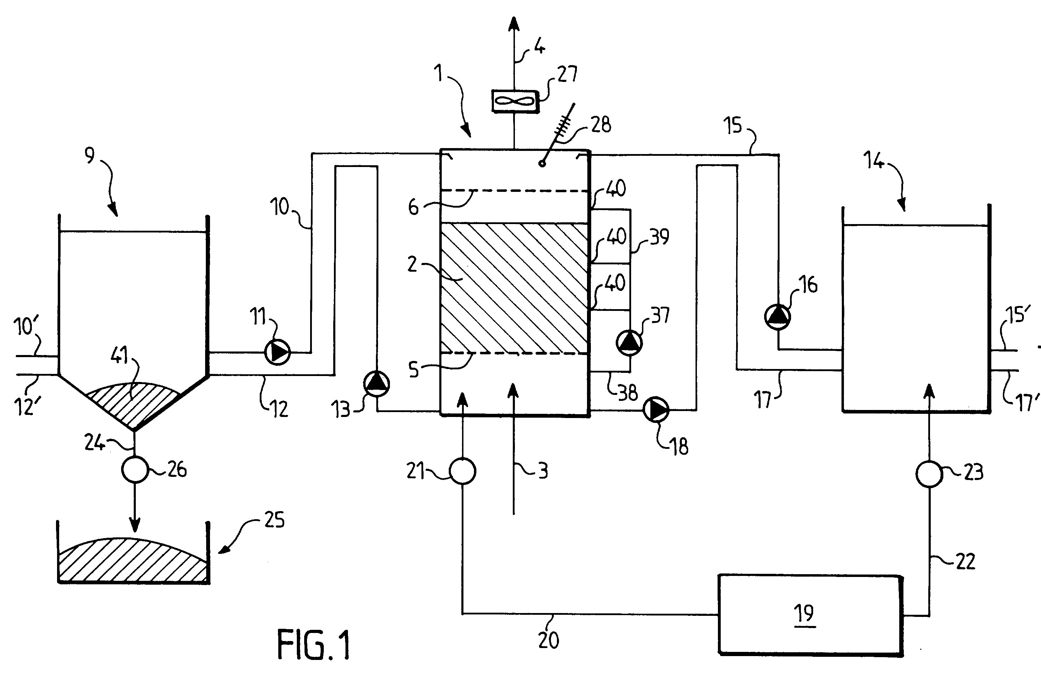

La partie de l'installation montrée sur la figure 1, comporte une enceinte métallique 1 de forme générale cylindrique, disposée verticalement, et contenant une charge 2 qui sert à épurer les rejets gazeux qui rentrent dans l'enceinte par le bas, comme montré par la flèche 3, et qui en sortent par le haut, comme montré par la flèche 4, après avoir traversé la charge 2.

L'enceinte 1 comporte une grille inférieure 5 et une grille supérieure 6 disposées horizontalement, entre lesquelles est contenue la charge 2.

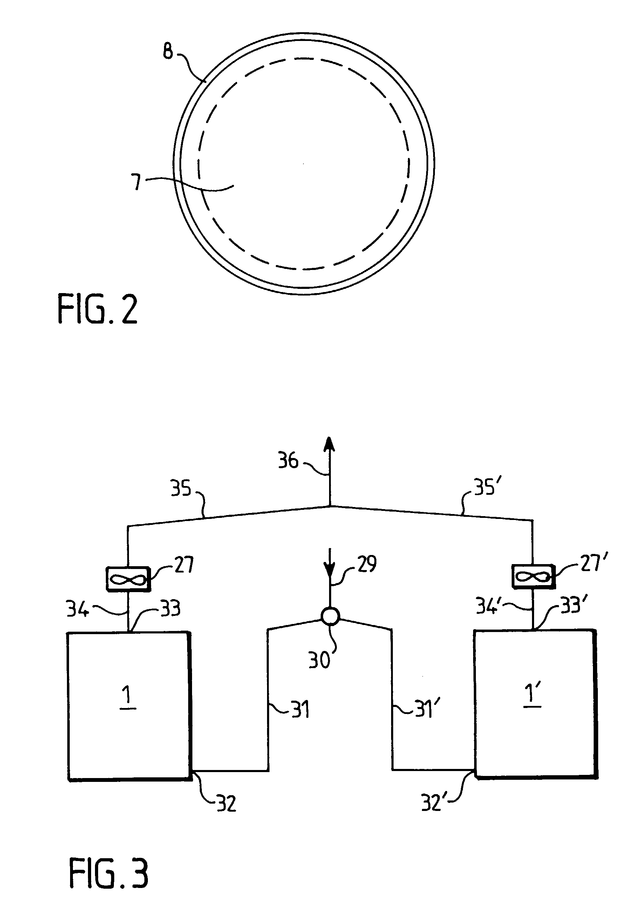

Cette dernière est formée d'une multitude de billes identiques 7 (figure 2) qui sont chacune, dans l'état illustré sur les figures 1 et 2, enrobées entièrement par une pellicule 8 de chaux.

Les billes 7 sont chacune faite en argile expansé, à pores ou interstices fermés à coeur et ouverts en surface (la limite entre les zones à pores fermés et à pores ouverts est montrée très schématiquement par un cercle en trait interrompu sur la figure 2), chaque bille 7 ayant un diamètre d'environ 15 mm, une masse volumique à l'état sec d'environ 564 kg/m$^3$ et une masse volumique à l'état humide d'environ 836 kg/m$^3$, la porosité de surface permettant la rétention d'une quantité de liquide représentant environ 20 % du volume total de la bille.

Ainsi, même à l'état humide, la masse volumique de chaque bille reste inférieure à celle de l'eau (1000 kg/m$^3$) et donc à la masse volumique d'une solution de sel dans de l'eau, ou à la masse volumique du lait de chaux, c'est-à-dire d'une suspension de chaux dans de l'eau.

Lorsqu'une multitude de billes 7 est mise en tas, comme c'est le cas pour la charge 2 dans l'état montré sur la figure 1, le volume libre entre les billes représente à peu près 30 % du volume occupé par le tas, cet espace libre permettant l'écoulement des rejets gazeux à travers la charge.

Plus précisément, dans l'état montré sur la figure 1, le tas de billes formant la charge 2, repose sur la grille 5 et est retenu sur les côtés par la paroi latérale de l'enceinte 1, le niveau supérieur de la charge 2 se situant en-dessous de la grille 6, les rejets gazeux pénétrant dans l'enceinte 1 comme montré par la flèche 3, traversant la grille 5, la charge 2 et la grille 6 avant de ressortir de l'enceinte comme montré par la flèche 4.

En outre de l'enceinte 1, l'installation comporte une cuve 9 de stockage et de décantation de liquide de lavage, avec une canalisation 10 sur laquelle est disposée une pompe 11 prévue entre le bas de la cuve 9 et le haut de l'enceinte 1, et avec une canalisation 12 sur laquelle est disposée une pompe 13 prévue entre le bas de l'enceinte 1 et celui de la cuve 9, la canalisation 12 étant conformée avec un coude anti-siphonage, c'est-à-dire un coude dont la partie la plus haute est située au-dessus du niveau maximum auquel il est prévu de remplir la cuve 1.

L'installation comporte également une cuve 14 de préparation et de stockage de lait de chaux, avec une canalisation 15 sur laquelle est disposée une pompe 16 prévue entre le bas de la cuve 14 et le haut de l'enceinte 1, et avec une canalisation 17 sur laquelle est disposée une pompe 18 prévue entre le bas de la cuve 14 et le bas de l'enceinte 1, conformée avec un coude anti-siphonage.

Une source 19 d'air comprimé est relié par une canalisation 20 sur laquelle est disposée une vanne 21, au bas de l'enceinte 1, et reliée par une canalisation 22 sur laquelle est disposée une vanne 23, au bas de la cuve 14.

Le fond de la cuve 9 est convergent vers une canalisation 24, qui débouche dans un bac 25 de récupération de dépôts, sur laquelle est disposée une vanne 26.

Un ventilateur extracteur 27 est prévu à l'aval de l'enceinte 1, pour faire circuler les rejets gazeux, et sur le trajet de ces derniers est prévue une sonde de température 28.

Comme on le voit sur la figure 3, la canalisation 29 par laquelle les rejets à épurer arrivent dans l'installation de traitement, est connectée à une vanne de sélection 30 elle-même connectée à une canalisation 31 et à une canalisation 31', la vanne 30 permettant de diriger les rejets amenés par la canalisation 29, soit vers la canalisation 31 soit vers la canalisation 31'.

La canalisation 31 relie la vanne 30 à un orifice 32 d'admission des rejets gazeux dans l'enceinte 1, orifice qui est ménagé dans le bas de la paroi latérale de celle-ci, un orifice 33 de sortie des rejets gazeux ménagé dans la paroi supérieure de l'enceinte 1 étant connecté à une canalisation 34 qui relie cet orifice au ventilateur extracteur 27, celui-ci refoulant dans une canalisation 35 qui débouche dans une cheminée 36 d'évacuation des rejets gazeux dans l'atmosphère.

Ainsi, lorsque la vanne 30 dirige les rejets gazeux vers la canalisation 31, ceux-ci pénètrent dans l'enceinte 1 par l'orifice 32, traversent celle-ci et donc la charge 2, en sortent par l'orifice 33, puis rejoignent la cheminée 36.

L'autre circuit permettant aux rejets de passer de la vanne 30 à la cheminée 36, est similaire, les éléments semblables étant désignés par la même référence numérique mais affectée d'un exposant prime.

Les cuves 9 et 14 coopèrent avec l'enceinte 1' de la même façon qu'avec l'enceinte 1, la figure 1 ne montrant qu'une portion des canalisations servant à effectuer cette coopération, ces canalisations étant désignées par les mêmes références numériques que pour l'enceinte 1, mais affectées d'un exposant prime.

On observera que la vanne 30 est située plus haut que le dessus de l'enceinte 1 ou de l'enceinte 1', de sorte que l'on peut remplir l'une ou l'autre de ces enceintes à partir de la cuve 9 ou de la cuve 14, sans que le liquide pénétrant en conséquence dans la canalisation 31 ou dans la canalisation 31', n'atteigne la vanne 30. On observera également qu'il n'y a pas de risque que l'enceinte 1 ou l'enceinte 1' se vide spontanément dans la cuve 9 ou dans la cuve 14, grâce aux coudes anti-siphonage prévus dans les canalisations 12, 12', 17 et 17'.

Lorsque l'enceinte 1 est remplie de liquide, afin d'agiter celui-ci, il est prévu une pompe de recirculation 37 connectée du côté aspiration à une canalisation 38 qui la relie à la partie de l'espace intérieur de l'enceinte 1 située entre le fond de celle-ci et la grille 5, tandis que le côté refoulement de la pompe 37 est connecté à un ensemble de canalisations 39 qui permet à la pompe 37 d'alimenter une pluralité d'orifices d'injection 40 prévus dans la paroi latérale de l'enceinte 1 au niveau où se trouve la charge 2, c'est-à-dire entre les grilles 5 et 6.

Dans la configuration montrée sur la figure 1, toutes les pompes sont à l'arrêt, les vannes 21, 23 et 26 sont fermées, la vanne 30 dirige les rejets amenés par la canalisation 29 vers la canalisation 31, de sorte que l'enceinte 1 est traversée par ces rejets avant qu'ils ne soient évacués dans l'atmosphère.

Lorsqu'on détecte avec la sonde 28, une élévation de température telle que les rejets qui sortent de l'enceinte 1 sont à peu prés (aux pertes techniques prés) à la même température que ceux qui y entrent, la période d'emploi de la charge 2 est terminée, l'on met en marche le ventilateur 27' et l'on agit sur la vanne de sélection 30 afin que les rejets passent par l'enceinte 1' avant de gagner la cheminée 36, puis l'on arrête le ventilateur extracteur 27.

On ouvre alors la vanne 26, de sorte que les dépôts 41 formés au fond de la cuve 9 du fait de la décantation du liquide contenu dans celle-ci, sont évacués dans le bac 25, et une fois les dépôts 41 évacués, on ferme la vanne 26, et on complète le remplissage de la cuve 9 avec de l'eau du réseau jusqu'à atteindre un niveau prédéterminé.

On met alors en fonctionnement la pompe 11, de sorte que le liquide contenu dans la cuve 9 remplit progressivement l'enceinte 1, le fonctionnement de la pompe 11 étant maintenu jusqu'à ce que soit atteint un niveau de remplissage prédéterminé, situé au-dessus de la grille 6, par exemple à 10 cm plus haut que celle-ci.

La charge 2 se trouve ainsi submergée dans un bain de liquide de lavage, dans lequel flottent les billes qui la constitue compte tenu du fait que leur masse volumique est inférieure à celle de ce liquide, la charge 2 restant toutefois immergée grâce à la grille 6 qui l'empêche de rejoindre la surface du bain.

On met alors en fonctionnement la pompe de recirculation 37, et l'on ouvre de façon cyclique la vanne 21, l'injection d'air comprimé qui en résulte associée à l'injection de jets de liquide par les orifices 40 provoquant une agitation du bain dans lequel sont plongées les billes, celles-ci se détachant les unes des autres et se mettant en mouvement de sorte qu'elles heurtent ou frottent les autres billes ou la paroi latérale et les grilles 5 et 6 de l'enceinte 1, ce qui fait que les produits qui étaient accrochés à la charge 2, y compris la pellicule 8 qui enrobait les billes, passent progressivement dans le bain.

Au bout d'un laps de temps prédéterminé, par exemple de 10 minutes, on met en fonctionnement la pompe 13 afin de vider l'enceinte 1 du bain chargé des produits précités, lorsque le niveau est légèrement en-dessous de la grille 5, on arrête la pompe 37 et on ferme la vanne 21, on ouvre alors la vanne 23, et lorsque l'enceinte 1 est vide, on arrête la pompe 13.

L'injection d'air comprimé effectuée dans le fond de la cuve 14 grâce à l'ouverture de la vanne 23, permet de remettre en suspension dans cette cuve la chaux qui s'était déposée au fond de celle-ci, c'est-à-dire d'y reconstituer du lait de chaux, ce qui est effectué à peu près 5 à 10 minutes après l'arrêt de la pompe 13, laps de temps pendant lequel la charge 2 a pu s'égoutter grossièrement.

On met alors en fonctionnement la pompe 16, on attend que l'enceinte 1 soit remplie de lait de chaux à peu près au même niveau qu'avec le liquide de lavage, on arrête la pompe 16 et on ferme la vanne 23, on met en fonctionnement la pompe de recirculation 37 et on ouvre cycliquement la vanne 21, mais de façon beaucoup moins fréquente qu'avec le liquide de lavage, on attend un laps de temps prédéterminé, par exemple de 5 minutes, pendant lequel les billes 7 s'imprègnent de lait de chaux, de façon complète sur l'ensemble de leur périphérie du fait de l'agitation du bain obtenue par la pompe 37 et par l'injection d'air comprimé, on met en fonctionnement la pompe 18 pour vider la cuve 1, lorsque le niveau du bain de lait de chaux est en-dessous de la grille 5, on arrête la pompe 37 et on ferme la vanne 21, et lorsque la cuve est vide, on arrête la pompe 18.

La charge 2 est alors complètement regénérée, les billes 7 ayant été entièrement lavées puis recouverte d'une nouvelle pellicule 8 de chaux.

Cette dernière constitue un réactif qui sert à retirer des rejets gazeux, des polluants acides qu'ils comportent, les produits retirés de la charge par le lavage étant constitués d'une part par les poussières piégées du fait du passage au travers de la charge, mais aussi par des produits de réaction des polluants acides avec la chaux, ces produits de réaction étant des sels solubles dans l'eau, qui précipitent lorsque la saturation du liquide de lavage est atteinte, et qui forment avec les poussières et la chaux résiduelle, le dépôt 41 obtenu par décantation dans la cuve 9.

Ces produits de décantation, récupérés dans le bac 25, sont neutres ou légèrement basiques, et peuvent être revalorisés par exemple dans les fabriques de tuiles ou de briques, ou encore dans les cimenteries.

On notera que la charge 2 permet d'effectuer une neutralisation des polluants acides par voie semi-humide, très favorable pour obtenir une bonne cinétique de réaction et de bons rendements, la période d'emploi de la charge se terminant lorsque toute l'eau contenue dans les billes 7 est évaporée.

Le lait de chaux utilisé comporte une concentration en chaux éteinte $Ca(OH)_2$ comprise entre 50 et 100 g/l d'eau du réseau, la quantité de chaux déposée par $m^3$ de charge 2 étant comprise entre 3 kg et 3,5 kg.

Les polluants gazeux acides pouvant être neutralisés sont les suivants :

- acide fluorhydrique : HF (fabrication d'aluminium, engrais, tuiles et briques, verre)
- acide chlorhydrique : Hcl (incinérations d'ordures ménagères, de plastiques, PVC, gaz issus de réactions chimiques)
- acide nitrique : $HNO_3$ (poudreries, nitration ...)
- acide sulfurique : $H_2SO_4$ (fabrication d'engrais, attaques acides ...)
- acide phosphorique : $H_3PO_4$ (fabrication d'engrais...)
- dioxyde de soufre : $SO_2$ (fabrication de piles, combustion de gaz, pétrole, charbon ...).

Cette liste n'est pas limitative, tout type d'acide peut être neutralisé par la chaux.

La neutralisation des gaz acides par la chaux s'accompagne d'une formation de sels de calcium, plus ou moins solubles, selon les réactions suivantes :

$$Ca(OH)_2 + 2\,HF \rightarrow CaF_2 + 2H_2O \tag{1}$$

$$Ca(OH)_2 + 2\,HCl \rightarrow CaCl_2 + 2H_2O \tag{2}$$

$$Ca(OH)_2 + 2HNO_3 \rightarrow Ca(NO_3)_2 + 2H_2O \tag{3}$$

$$Ca(OH)_2 + H_2SO_4 \rightarrow CaSO_4 + 2H_2O \tag{4}$$

$$3Ca(OH)_2 + 2H_3PO_4 \rightarrow Ca_3(PO_4)_2 + 6H_2O \tag{5}$$

$$Ca(OH)_2 + SO_2 \rightarrow CaSO_3 + H_2O \tag{6}$$

$$CaSO_3 + \tfrac{1}{2}\,O_2 \rightarrow CaSo_4 \tag{7}$$

Les sels formés présentent des états d'hydratation variables.

Le tableau suivant montre pour certains sels leur solubilité et leur densité :

| | Solubilité dans l'eau (à 20°C ) en g/l | Densite |
|---|---|---|
| Chaux : $Ca(OH)_2$ | 1,66 | .234 |
| CaO | 1,2 | .34 |
| Fluorure de calcium : | | |
| $CaF_2$ | 0,015 | .318 |
| chlorure de calcium $CaCl_2$ | 745 | .215 |
| $CaCl_2, 2H_2O$ | 830 | .083 |
| $CaCl_2, 6H_2O$ | 1666 | .168 |
| Nitrate de calcium : | | |
| $Ca(NO_3)_2$ | 1220 | 2,5 |
| Sulfate de calcium : | | |
| $CaSO_4, 2H_2O$ | 2,66 | 2,32 |

Le tableau suivant résume les consommations de chaux ($Ca(OH)_2$) par les acides, qui varient de 0,6 à 1,85 gramme de chaux par gramme d'acide.

La quantité de sels formée est indiquée ; ces sels seront solubilisés ou précipiteront selon leur nature et leur concentration.

Le fluorure de calcium, peu soluble (0,015 g/l) précipitera presque en totalité et sera facilement éliminé après lavage de la charge par simple décantation.

Le sulfate de calcium sera en partie solubilisé (2,66 g/l en solution pure) et précipitera lorsque la concentration dans l'eau de lavage sera supérieure.

| Nature de l'acide à traiter | Consommation de chaux (g/g d'acide) | Quantité de sel formée (g/g d'acide) |
|---|---|---|
| Acide fluorhydrique HF | 74/40 = 1,85 | $CaF_2 = 78/40 = 1,95$ (soluble à 0,015 g/l) |
| Acide chlorhydrique HCl | 74/73 = 1,01 | $CaCl_2,2H_2O = 147/73 = 2$ (soluble à 830 g/l) |
| Dioxyde de soufre $SO_2$ | 74/64 = 1,15 | $CaSO_4,2H_2O = 172/64=2$ (soluble à 2,66 g/l) |
| Acide nitrique $HNO_3$ | 74/126 = 0,59 | $Ca(NO_3)_2 = 164/126=1,3$ (très soluble) |
| Acide phosphorique $H_3PO_4$ | 222/196 = 1,13 | $Ca_3(PO_4)_2=310/196 =1,5$ |

A titre d'exemple, pour un débit de rejet gazeux de 100.000 $Nm^3$/h d'une usine de production de tuiles, avec une température des rejets de 130°C, une concentration en acide fluorhydrique de 100 $mg/Nm^3$ et une concentration en dioxyde de soufre de 90 $mg/Nm^3$, la quantité de dépôts (boues) 41 générée au cours d'un cycle de quatre heures est de 78 kg de fluorure de calcium, 97,2 kg de sulfate de calcium hydraté, soit environ 180 kg de sel, la consommation de chaux, en quantité stoechiométrique, étant de 115,4 kg.

De nombreuses variantes sont possibles en fonction des circonstances.

Ainsi, dans des variantes non illustrées, le fond de la cuve 14 et des enceintes 1 et l'est convergent comme celui de la cuve 9 afin de faciliter l'évacuation totale du contenu ; la conformation anti-siphonage des canalisations est remplacée par l'utilisation de clapets de non-retour ; les ventilateurs 27 et 27' sont remplacés chacun par un volet étanche qu'on ouvre ou ferme là ou les ventilateurs étaient respectivement mis en marche et arrêtés, tandis qu'un ventilateur extracteur est disposé dans la cheminée 36 ; d'autres moyens d'agitation dans les enceintes 1 et 1' sont prévus, notamment des moyens d'agitation mécaniques ; les enceintes 1 et 1' sont chacune remplacées par deux ou davantage d'enceintes par lesquelles passent successivement les rejets à épurer ; les billes 7 en argile expansé sont remplacées par des billes de diamètre différent, par exemple compris entre 10 et 20 mm, ou par des billes en mousse de céramique, matériau également capable de supporter les températures élevées, par exemple de l'ordre de 800°, que sont susceptibles d'atteindre les rejets gazeux ; et un réactif autre que de la chaux est utilisé pour retirer les polluants présents dans les rejets.

Dans une autre variante non illustrée, la charge 2 sert uniquement pour effectuer une épuration mécanique des rejets, aucun réactif ne venant imbiber les billes de la charge pour effectuer une épuration chimique.

Plus généralement, on rappelle que l'invention ne se limite pas aux exemples décrits et représentés.

## Revendications

1. Procédé de traitement de rejets gazeux, dans lequel une charge sert à épurer des dits rejets qui la traversent pendant des périodes d'emploi, et est nettoyée après chaque dite période d'emploi ; caractérisé par :

   - l'utilisation, pour former ladite charge (2), de billes (7) qui sont résistantes aux températures prévues pour lesdits rejets, et qui flottent lorsqu'elles sont mises dans un liquide de lavage prédéterminé ; et
   - le fait que chaque nettoyage de ladite charge (2) est effectué par submersion de celle-ci dans un bain de dit liquide, par agitation de ce bain avec maintien de la charge à l'état immergé, puis par séparation de la charge et du bain.

2. Procédé selon la revendication 1, caractérisé en outre par l'utilisation de dites billes (7) qui sont incompressibles.

3. Procédé selon l'une quelconque des revendications 1 ou 2, caractérisé en outre par :

   - l'utilisation d'un réactif prédéterminé pour retirer des polluants présents dans lesdits rejets gazeux ;
   - l'utilisation de dites billes (7) qui sont poreuses au moins en surface, et qui flottent dans une suspension dudit réactif ; et
   - le fait qu'avant chaque dite période d'emploi, les billes (7) de la charge (2) sont enrobées d'une pellicule (8) dudit réactif, par submersion dans un bain de dite suspension, par agitation de ce bain avec maintien à l'état immergé de la charge, puis par séparation de ce bain et de la charge.

4. Procédé selon la revendication 3, caractérisé en ce que ledit réactif prédéterminé est de la chaux et ladite suspension du lait de chaux, lesdits polluants à retirer étant acides.

5. Procédé selon l'une quelconque des revendications 1 à 4, caractérisé en outre par l'utilisation de billes (7) qui sont poreuses uniquement en surface.

6. Procédé selon la revendication 5, caractérisé en outre par l'utilisation de billes (7) qui sont en argile expansé.

7. Procédé selon la revendication 5, caractérisé en outre par l'utilisation de billes qui sont en mousse de céramique.

8. Procédé selon l'une quelconque des revendications 1 à 7, caractérisé en outre par:

   - l'utilisation d'une cuve (9) pour stocker du dit liquide de lavage entre des opérations de nettoyage ; et
   - le fait qu'après une opération de nettoyage, on laisse le liquide de lavage décanter dans ladite cuve (9), qu'après décantation on évacue le dépôt (41) se trouvant au fond de la cuve, et qu'avant d'effectuer une opération de nettoyage, on remplit la cuve (9) jusqu'à un niveau prédéterminé s'il y a lieu.

9. Procédé selon la revendication 8, caractérisé en ce c'est avec de l'eau du réseau qu'on remplit ladite cuve (9) s'il y a lieu.

10. Procédé selon l'une quelconque des revendications 1 à 9, caractérisé en outre par l'utilisation d'une même enceinte (1, 1') pour contenir la charge (2) et faire traverser celle-ci par des dits rejets gazeux, et pour nettoyer cette charge.

11. Procédé selon la revendication 10, caractérisé en outre par l'utilisation de deux dites enceintes (1, 1'), contenant chacune une dite charge (2), et par le fait que le nettoyage de l'une des dites charges est effectué pendant qu'est en cours une période d'emploi de l'autre charge.

EP 0 776 688 A1

**12.** Procédé selon l'une quelconque des revendications 1 à 11, caractérisé en outre par l'utilisation, en cours d'emploi, d'une sonde de température (28) disposée dans le trajet des rejets ayant traversé la charge (2), pour déterminer la fin de cette période d'emploi.

**13.** Installation de traitement de rejets gazeux convenant à la mise en oeuvre du procédé selon l'une quelconque des revendications 1 à 12, caractérisée en ce qu'elle comporte :

- une charge (2) formée par des billes (7) qui sont résistantes aux températures prévues pour lesdits rejets, et qui flottent lorsqu'elles sont mises dans un liquide de lavage prédéterminé, cette charge servant, pendant des périodes d'emploi, à épurer des dits rejets gazeux qui la traversent, et étant nettoyée après chaque dite période d'emploi ;
- une enceinte (1, 1') contenant ladite charge (2), adaptée à être remplie et vidangée de dit liquide de lavage afin respectivement de submerger la charge contenue dans l'enceinte dans un bain de nettoyage et de l'en séparer, comportant un moyen (6) pour maintenir la charge (2) à l'état immergé quand l'enceinte est remplie, et présentant de part et d'autre de la charge, respectivement un orifice d'admission (32, 32') et un orifice (33, 33') de sortie pour des dits rejets gazeux à épurer par cette charge pendant une dite période d'emploi ;
- des moyens (9-13, 10', 12') pour remplir ladite enceinte (1, 1') avec du dit liquide de lavage et pour l'en vidanger; et
- des moyens (19-21, 37-40) pour agiter dans l'enceinte un dit bain de nettoyage.

**14.** Installation selon la revendication 13, caractérisée en ce que lesdites billes (7) sont en outre incompressibles.

**15.** Installation selon l'une quelconque des revendications 13 ou 14, caractérisée en ce que :

- lesdites billes (7) sont en outre poreuses, et flottent dans une suspension d'un réactif prédéterminé pour retirer des polluants présents dans lesdits rejets gazeux, de sorte que chaque bille se trouve enrobée d'une pellicule (8) de ce réactif lorsqu'elle a été immergée dans ladite suspension puis séparée de celle-ci ;
- ladite enceinte (1, 1') est en outre adaptée à être remplie et vidangée de dite suspension ; et
- ladite installation comporte en outre des moyens (14-18, 15', 17') pour remplir ladite enceinte (1, 1') avec de ladite suspension et l'en vidanger, ainsi que des moyens (19-21, 37-40) pour agiter dans l'enceinte un dit bain de dite suspension.

**16.** Installation selon la revendication 15, caractérisée en ce que ledit réactif prédéterminé est de la chaux et ladite suspension du lait de chaux, lesdits polluants à retirer étant acides.

**17.** Installation selon l'une quelconque des revendications 15 ou 16, caractérisée en ce que lesdits moyens pour remplir ladite enceinte avec de ladite suspension et l'en vidanger, comportent une cuve (14) de stockage de la suspension, et des moyens de pompage (14-18, 15', 17') entre l'enceinte (1, 1') et la cuve (14) de stockage.

**18.** Installation selon l'une quelconque des revendications 15 à 17, caractérisée en ce que lesdits moyens pour agiter dans l'enceinte un bain de nettoyage, et lesdits moyens pour agiter dans l'enceinte un bain de dite suspension, comportent une pompe (37) de recirculation dans l'enceinte, alimentant des buses (40) disposées en regard de la charge (2).

**19.** Installation selon l'une quelconque des revendications 15 à 18, caractérisée en ce que lesdits moyens pour agiter dans l'enceinte un bain de suspension qui s'y trouve comportent des moyens (19-21) pour injecter cycliquement de l'air comprimé dans ledit bain.

**20.** Installation selon l'une quelconque des revendications 13 à 19, caractérisée en ce que lesdites billes (7) sont poreuses uniquement en surface.

**21.** Installation selon la revendication 20, caractérisée en ce que lesdites billes (7) sont en argile expansé.

**22.** Installation selon la revendication 20, caractérisée en ce que lesdites billes sont en mousse de céramique.

**23.** Installation selon l'une quelconque des revendications 13 à 22, caractérisée en ce que ledit moyen pour maintenir la charge à l'état immergé quand l'enceinte est remplie, est réalisé par une grille (6) disposée au-dessus de ladite charge (2) à un niveau tel que cette grille est immergée quand l'enceinte est remplie.

9

EP 0 776 688 A1

**24.** Installation selon l'une quelconque des revendications 13 à 23, caractérisée en ce que ladite enceinte comporte une grille inférieure (5) disposée en-dessous de la charge.

**25.** Installation selon l'une quelconque des revendications 13 à 24, caractérisée en ce que lesdits moyens pour remplir ladite enceinte avec dudit liquide de lavage et l'en vidanger, comportent une cuve (9) de stockage dudit liquide de lavage entre des opérations de nettoyage, et des moyens de pompage (11, 13) entre l'enceinte et la cuve de stockage.

**26.** Installation selon la revendication 25, caractérisée en ce qu'elle comporte des moyens (24-26) pour évacuer de ladite cuve (9) de stockage, des dépôts (41) se formant dans son fond, et des moyens pour remplir ladite cuve avec de l'eau du réseau.

**27.** Installation selon l'une quelconque des revendications 13 à 26, caractérisée en ce qu'elle comporte :

- deux dites enceintes (1, 1'), contenant chacune une dite charge (2) ;
- des moyens (30) pour diriger des rejets gazeux à épurer soit vers l'une soit vers l'autre de ces deux enceintes (1, 1');
- une même cuve (9) de stockage de dit liquide de lavage, pour les deux dites charges ; et
- une même cuve (14) de stockage de dite suspension de réactif, pour les deux dites charges.

**28.** Installation selon l'une quelconque des revendications 13 à 27, caractérisée en ce qu'elle comporte une sonde de température (28) disposée dans le trajet des rejets ayant traversé une charge (2), pour déterminer la fin de chaque période d'emploi de cette charge.

FIG.1

FIG. 2

FIG. 3

**Office européen des brevets**

# RAPPORT DE RECHERCHE EUROPEENNE

Numero de la demande

EP 96 40 2596

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | FR 2 655 563 A (SAPS ANTI CORROSION) 14 Juin 1991<br>* page 1, ligne 24 - ligne 30 *<br>* page 6, ligne 1 - ligne 8 *<br>* page 7, ligne 18 - ligne 33 *<br>* page 10, ligne 19 - page 11, ligne 12; figure 1 *<br>--- | 1-4,10 | B01D53/40<br>B01D53/50<br>B01D53/68<br>B01J20/34 |
| X | EP 0 100 024 A (BAYER AG) 8 Février 1984<br>* page 3, ligne 24 - page 4, ligne 10 *<br>* page 8, ligne 20 - page 9, ligne 7; figure 1 *<br>--- | 1,2,10 | |
| A | DE 36 41 205 A (FHW BRENNTECHNIK GMBH) 9 Juin 1988<br>* le document en entier *<br>--- | 1-7 | |
| A | US 4 668 489 A (ALEXANDER JEFFREY ET AL) 26 Mai 1987<br>* colonne 5, ligne 7 - ligne 30; revendications 1-17; figures 4-6 *<br>----- | 1-7 | |

**DOMAINES TECHNIQUES RECHERCHES (Int.Cl.6)**

B01D
B01J

Le présent rapport a été établi pour toutes les revendications

| Lieu de la recherche | Date d'achèvement de la recherche | Examinateur |
|---|---|---|
| LA HAYE | 20 Février 1997 | Eijkenboom, A |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)